# EUROPÄISCHE PATENTANMELDUNG

(11) **EP 1 498 589 A2**
(43) Veröffentlichungstag der Anmeldung: **19.01.2005**
(21) Anmeldenummer: 04010265.9
(22) Anmeldetag: 30.04.2004
(51) Int. Cl.: F02B 27/02

(54) **Luftansaugkanalsystem für Verbrennungskraftmaschinen**

(30) Priorität: 18.07.2003 DE 10332640
(71) Anmelder: Pierburg GmbH, 41460 Neuss (DE)
(72) Erfinder: Kühnel, Hans-Ulrich, 41239 Mönchengladbach (DE); Sanders, Michael, 41564 Kaarst (DE)
(74) Vertreter: Ter Smitten, Hans

(57) **Zusammenfassung**

Die Erfindung beschreibt ein Luftansaugkanalsystem mit einer Längenschaltung, wobei der Drehmomenteneinbruch zwischen den beiden Drehmomentenmaxima des langen bzw. des kurzen Luftansaugkanalweges (3,5) dadurch verhindert wird, dass zusätzlich eine kleine Öffnung (12,13) zu den jeweiligen Ansaugkanälen freigegeben werden kann, wodurch sich die Eigenfrequenz des Systems erhöht und sich das Drehmomentenmximum verschiebt. Bei geeigneter Regelung und Anordnung der Öffnungen (12,13) kann hierdurch ein Drehmomentenverlauf erreicht werden, der derjenigen eines kontinuierlich längenveränderbaren Luftansaugkanalsystems sehr nahe kommt, und gleichzeitig im Vergleich dazu deutlich einfacher und kostengünstiger herzustellen und zu montieren ist.

## Beschreibung

Die Erfindung betrifft ein Luftansaugkanalsystem für Verbrennungskraftmaschinen mit einem Sammeleinlasskanal, der fluidisch mit zu den Zylindern der Verbrennungskraftmaschine führenden Luftansaugkanälen verbunden ist, wobei jeder Luftansaugkanal eine Kurzschlussöffnung aufweist, die durch ein Ventil beherrscht ist, welches je nach Betriebszustand der Verbrennungskraftmaschine eine fluidische Verbindung zu den einzelnen Luftansaugkanälen durch Öffnen oder Schließen herstellt oder unterbricht, so dass die wirksame Ansauglänge der einzelnen Luftansaugkanäle wahlweise verkürzbar oder verlängerbar ist.

Es ist bekannt, dass die Schwingungen in den Saugkanälen eine Eigenfrequenz aufweisen die umgekehrt proportional der Laufzeit der Druckwellen ist, welche den Aufladeeffekt im Zylinder bewirken. Dieser Effekt weist jedoch ein ausgeprägtes Maximum auf. Deshalb wurden solche schaltbaren Luftansaugkanalsysteme, bei denen die jeweiligen die Kurzschlussöffnung beherrschenden Ventile in eine Auf- oder eine Zustellung geschaltet werden, geschaffen, die in einer Vielzahl von Anmeldungen beschrieben werden. Das Verkürzen des Luftansaugkanals durch Öffnen des die Kurzschlussöffnung beherrschenden Ventils, dient zu einer Verschiebung des Drehmomenten-Maximums hin zu einer höheren Drehzahl, so daß durch schaltbare Saugrohre zwei Maxima angefahren werden können. Die Leistung der Verbrennungskraftmaschine kann hierdurch auch bei höherer Last gesteigert werden. Ein solches Luftansaugkanalsystem wird beispielsweise in der DE 195 26 241 A1 beschrieben, wobei die Kurzschlussöffnungen in dieser Ausführung über eine gemeinsame im Sammeleinlasskanal gelagerte Schaltklappenwelle, auf der die Schaltklappen angeordnet sind, geschlossen bzw. geöffnet werden. Weitere gattungsgemäße Ausführungen insbesondere zur Vereinfachung der Herstellung oder Montage der Schaltklappeneinrichtungen sind beispielsweise durch die DE 196 14 474 A1 oder die DE 101 43 384 A1 offenbart.

In der DE 101 06 515 A1 wird ein schaltbares Luftansaugkanalsystem mit zwei zu einem Zylinder führenden Ansaugkanälen beschrieben, die getrennt voneinander verschließbar sind, wobei zusätzlich bei einem Öffnen des Kurzschlusskanals der weitere nicht durchströmte Bereich des gesamten Luftansaugkanals durch ein zweites Ventil verschlossen wird, wodurch eine Überlagerung von schwer vorhersagbaren Rohrresonanzen verhindert werden soll.

Wie bereits erwähnt treten bei schaltbaren Zweilängen-Saugrohren zwei Maxima bei in zwei verschiedenen Drehzahlbereichen auf, so dass die Füllung in einem weiten Bereich optimiert wird. Es bleibt jedoch zwischen diesen beiden Maxima ein störender Drehmomenteinbruch, der den genannten Ausführungen gemeinsam ist. Aus diesem Grund wurden stufenlos verstellbare Luftansaugkanalsysteme entwickelt, wodurch dieser Drehmomenteinbruch verhindert werden kann und zu jeder Drehzahl die optimale Saugrohrlänge zur Drehmomentmaximierung eingestellt werden kann.

Ein solches stufenlos verstellbares Luftansaugkanalsystem ist beispielsweise in der DE 10139302 C1 beschrieben. Bei kontinuierlich längenverstellbaren Luftansaugkanalsystemen ist jedoch der Herstellungs- und Montageaufwand und somit die Kosten nicht zuletzt aufgrund der Dichtungsproblematik der einzelnen Saugkanäle untereinander extrem groß im Vergleich zu schaltbaren Luftansaugkanalsystemen. Dementsprechend steigt auch die Störanfälligkeit solcher Systeme.

Daher ist es Aufgabe der Erfindung, ein Luftansaugkanalsystem bereit zu stellen, welches auf einfache und preisgünstige Art und Weise den Drehmomenteinbruch zwischen den beiden Drehmomentmaxima eines schaltbaren Luftansaugkanalsystems verhindert, kostengünstig herzustellen und zu montieren ist und über den gesamten Drehzalhbereich einen Aufladeeffekt erzielt, der dem eines kontinuierlich längenverstellbaren Saugrohres möglichst nah kommt.

Diese Aufgabe wird dadurch gelöst, dass im Bereich der Kurzschlussöffnungen jeweils eine Öffnung zur fluidischen Verbindung des Sammeleinlasskanals mit den einzelnen Luftansaugkanälen freigebbar ist, deren durchströmbare Querschnittsfläche zwischen 1 % und 25 %, vorzugsweise zwischen 10 % und 20 % der durchströmten Querschnittsfläche des einzelnen Luftansaugkanals beträgt. Durch das Öffnen dieser kleinen Öffnung wird die Eigenfrequenz im Luftansaugkanal erhöht, d.h. das Maximum zu höheren Frequenzen hin verschoben. Gleichzeitig wird die Füllungs- bzw. Drehmomentenkurve flacher. Die maximale Amplitude sinkt zwar geringfügig, die Breite der Kurve hingegen nimmt zu, so dass bei geschickter Auslegung von Position und Größe nicht nur der Drehmomenteinbruch ausgeglichen werden kann, sondern die Füllungskurve auch zu niedrigen Drehzahlen erweitert werden kann.

In einer bevorzugten Ausführungsformen sind die Öffnungen jeweils in einer Wand der einzelnen Luftansaugkanäle angeordnet und werden durch je ein Ventil beherrscht. Durch eine solche Ausführung wird der Aufwand bei der Herstellung und Montage sehr gering gehalten und auf einfache Art und Weise die Steuerung der zusätzlichen Öffnung ermöglicht.

Eine vorteilhafte Position der Öffnung zur Verbreiterung der Drehmomentenkurve und Verschiebung des Maximums und somit zur Verbesserung der Füllung ergibt sich, wenn die Öffnungen, betrachtet über die Gesamtansauglänge des Luftansaugkanals, jeweils etwa in der Mitte in einer Wand des Luftansaugkanals angeordnet sind.

Vorzugsweise sind die Ventile als Klappenventile ausgeführt, wobei die gleichzeitig zu betätigenden Ventile über eine Welle miteinander verbunden sind und über eine gemeinsame Stellvorrichtung betätigbar sind. Hierdurch wird die zu montierende Anzahl an Bauteilen reduziert und ein gleichzeitiges Schließen und Öffnen der jeweiligen Klappenventile sichergestellt.

In einer alternativen Ausführungsform sind die Öffnungen dadurch herstellbar, dass die die Kurzschlussöffnung beherrschenden Ventile über eine Stellvorrichtung in eine Zwischenstellung schaltbar sind, in der lediglich ein Spalt zwischen den Ventilen und einem jeweils mit den Ventilen korrespondierenden Abschnitt der Wand des Luftansaugkanals freigegeben ist. Auf diese Weise wird die Anzahl der benötigten Bauteilen im Vergleich zu schaltbaren Saugrohren gemäß dem Stand der Technik gleich gehalten, so dass kein zusätzlicher Montageaufwand entsteht und keine zusätzlichen Herstellkosten aufgebracht werden müssen. Gleichzeitig wird der Drehmomenteinbruch zwischen den beiden Maxima jedoch verhindert.

Zur weiteren Minimierung der Kosten und Sicherstellung der synchronen Verstellung der betreffenden Ventile sind die die Kurzschlussöffnung beherrschenden Ventile als Klappenventile ausgeführt, die auf einer gemeinsamen Welle angeordnet sind, welche über eine Stellvorrichtung in Drehung versetzbar ist.

Eine optimierte Position der Öffnung im Luftansaugkanal ergibt sich auch hier, wenn die mit der Klappe korrespondierende Wand derart ausgebildet ist, dass der Spalt zwischen Klappe und Wand im wesentlichen im in Strömungsrichtung der Luft liegenden Bereich der Klappe entsteht, wodurch ein optimaler Drehmomentenverlauf entsteht.

Zur Sicherstellung einer optimalen Einstellung des benötigten Spaltes sind mit der Stellvorrichtung Winkel mit einer Genauigkeit von kleiner als 0,5° einstellbar.

Es ist vorteilhaft, wenn die Öffnungen bei Drehzahlen zwischen den jeweiligen Schnittstellen der sich ergebenden Drehmomentenkurve bei geöffnetem zusätzlichem Querschnitt mit den sich ergebenden Drehmomentenkurven des langen Kanals bzw. des kurzen Kanals bei geschlossenem zusätzlichem Querschnitt freigegeben sind und in den anderen Drehzahlbereichen geschlossen sind. Die entsprechenden Drehmomentenverläufe sind durch Versuche zu ermitteln. Durch diese Steuerung wird erreicht, dass alle drei auftretenden Maxima bei kurzem Saugrohr, langen Saugrohr oder der Zwischenstellung durch Öffnen des zusätzlichen Querschnitts tatsächlich durchfahren werden. Durch diese Steuerung dieser jeweiligen Klappenstellungen wird der Drehmomentenverlauf optimiert.

Zusätzlich können die Öffnungen bei einer Drehzahl unterhalb des zweiten Schnittpunktes der Drehmomentenkurve des langen Luftansaugkanals mit der sich bei geöffnetem zusätzlichem Querschnitt ergebenden Drehmomentenkurve freigegeben sein, so dass der flache Verlauf der sich ergebenden Kurve bei geöffneter kleiner Querschnittsfläche dazu genutzt werden kann, auch im kleinen Drehzahlbereich eine Drehmomentenerhöhung zu erreichen. Auch dieser Schnittpunkt ist durch Versuche zu ermitteln.

Durch diese Ausführungsformen wird ein Luftansaugkanalsystem geschaffen, welches auf einfache Art und Weise den Drehmomentenverlauf insbesondere zwischen den beiden Drehmomentenmaxima bei langem bzw. kurzen Saugkanal aber auch im Bereich kleiner Drehzahlen deutlich optimiert. Eine derartiges Luftansaugkanalsystem ist kostengünstig herzustellen und zu montieren. Bei geeigneter Steuerung kommt der Drehmomentenverlauf bei deutlich verringertem Aufwand und reduzierten Kosten einem kontinuierlich längenverstellbaren Luftansaugkanalsystem sehr nahe.

Ausführungsbeispiele sind in den Zeichnungen dargestellt und werden nachfolgend beschrieben.

Figur 1 zeigt in geschnittener Darstellung eine Seitenansicht einer Ausführung eines erfindungsgemäßen Luftansaugkanalsystems im Bereich einer Kurzschlussöffnung.

Figur 2 zeigt eine Seitenansicht einer alternativen Ausführungsform eines erfindungsgemäßen Luftansaugkanalsystems im Bereich der Kurzschlussöffnung in geschnittener Darstellung.

Figur 3 zeigt eine grafische Darstellung der Drehmomentenverläufe bei langem Kanal, kurzen Kanal bzw. langem Kanal mit kleiner Öffnung über den durchfahrbaren Drehzahlbereich einer Verbrennungskraftmaschine.

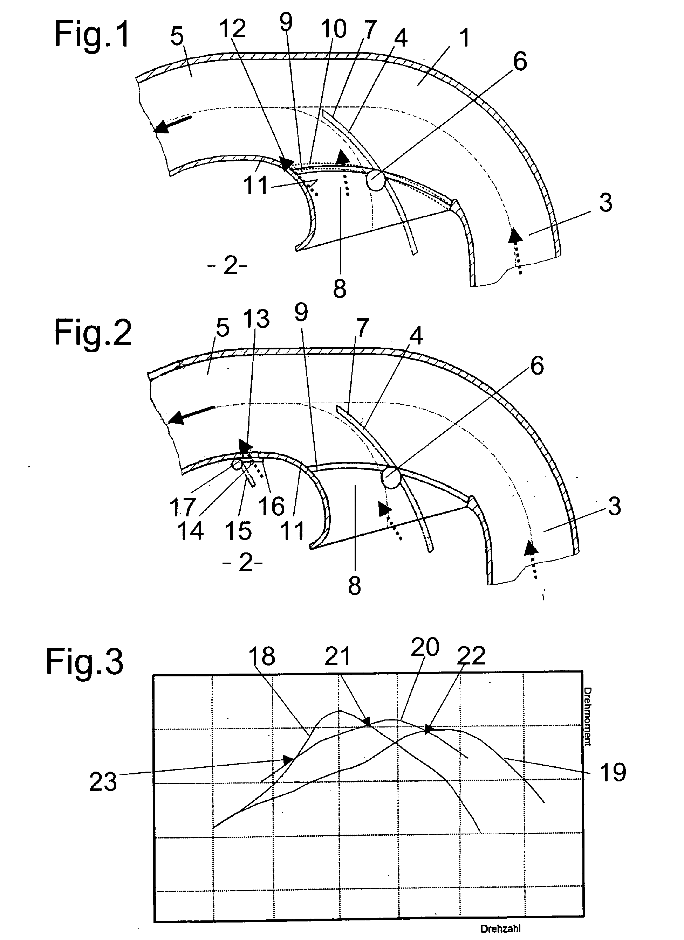

In Figur 1 ist ein Ausschnit eines einzelnen Luftansaugkanal 1 eines ersten Ausführungsbeispiels dargestellt. Von einem Sammeleinlasskanal 2 strömt Luft entweder über den langen Ansaugweg 3 oder bei geöffneter Schaltklappe 4 über den kurzen Ansaugweg 5 des Luftansaugkanals 1 zu einem nicht dargestellten Zylinder der Verbrennungskraftmaschine, der sich am Ende des Ansaugwegs befindet. Die Pfeile in der Zeichnung zeigen dabei die Strömungsrichtung der Luft, wobei durch gestrichelte Pfeile die alternativen Strömungswege angedeutet sind, während der ständig durchströmte Bereich mit einer nicht unterbrochenen Linie des Pfeils dargestellt ist.

Die Schaltklappe 4 ist fest mit einer Welle 6 verbunden, welche über eine nicht dargestellte Stellvorrichtung in Drehung versetzbar ist. Die Stellvorrichtung kann dabei drei verschiedene Stellungen der Schaltklappe 4 anfahren, wobei eine Stellung 7 der Schaltklappe 4 einem geöffneten Kurzschlusskanal 8, eine Stellung 9 dem vollständig geschlossenen Kurzschlusskanal 8 sowie in strichpunktierter Darstellung eine Stellung 10 einer Zwischenstellung entspricht, bei der lediglich zu einer Wand 11 des Luftansaugkanals 1 ein Spalt 12 zur Durchströmung freigegeben wird. Es ist zu erkennen, dass in dieser Ausführung die dem Spalt gegenüber liegende Seite der Kurzschlussöffnung 8 so ausgeführt ist, dass bei einer geringen Winkelverstellung gemäß Stellung 10 der Schaltklappe 4 kein Spalt freigegeben wird, so dass lediglich in Strömungsrichtung gesehen hinter der Schaltklappe 4 eine Luftmasse durch die Kurzschlussöffnung 8 strömen kann, welche die Eigenfrequenz des Ansaugkanals 1 erhöht, wodurch das Maximum des langen Ansaugkanals 3 in Richtung zu höheren Drehzahlen verschoben wird. Zur Verwirklichung eines solchen Systems wird eine Stellvorrichtung eingesetzt, die in der Lage ist, einen Winkel. mit einer Genauigkeit von kleiner als 0,5° einzustellen.

In Figur 2 ist der gleiche Ausschnitt einer alternativen Ausführungsform dargestellt. Die Schaltklappe 4, welche über die Welle 6 betätigt wird, kann hier nur in zwei Stellungen, nämlich Auf- 7 und Zu-Stellung 9, über eine nicht dargestellte Stellvorrichtung gedreht werden. Zusätzlich ist jedoch in Strömungsrichtung gesehen hinter der Schaltklappe 4 eine Öffnung 13 in Form einer kleinen Bohrung 13 in der Wand 11 des Luftansaugkanals 1 angeordnet, welche durch eine Klappe 14 beherrscht wird, die wiederum über eine Welle 15 durch eine nicht dargestellte Stellvorrichtung in Drehung versetzbar ist. Diese Klappe 14 öffnet oder verschließt die Bohrung 13 vollständig, wobei in Figur 2 die geöffnete Stellung 15 und die geschlossene Stellung 16 der Klappe 14 dargestellt sind. Durch Öffnen dieser Klappe 14 wird auch in diesem Ausführungsbeispiel das Drehmomentenmaximum des langen Ansaugweges 3 bei geschlossener Schaltklappe 4 in Richtung höherer Drehzahlen durch Änderung der Eigenfrequenzen verschoben.

Zur Optimierung der Steuerung der Klappen 4,14 werden durch Versuche die verschiedenen Drehmomentenverläufe ermittelt. Figur 3 zeigt beispielhaft für ein Luftansaugkanalsystem ermittelte Drehmomentenverläufe über die Drehzahl. Dabei entspricht ein Graph 18 dem Drehmomentenverlauf des langen Ansaugweges 3 bei geschlossener Schaltklappe 4, ein Graph 19 dem Drehmomentenverlauf des kurzen Ansaugweges 5 bei vollständig geöffneter Schaltklappe 4 und ein Graf 20 dem Drehmomentenverlauf bei geöffneter Schaltklappe 14 bzw. bei Stellung 10 der Schaltklappe 4, also mit Freigabe des geringen Spaltes 12. Die entstehenden Drehmomentenmaxima sind deutlich zu erkennen. Der Bereich zwischen den beiden Schnittpunkten 21,22 der jeweiligen Drehmomentenverläufe 18 und 20 bzw. 19 und 20 bilden dabei den optimalen Moment zum Freigeben der zusätzlichen Öffnung 12,13, also zum Schalten der Schaltklappe 4 in die Stellung 10 bzw. zum Öffnen der Klappe 14.

Zusätzlich ist hier zu erkennen, dass durch das Verschieben des Maximums bei geöffneter Klappe 14 oder bei Zwischenstellung 10 der Klappe 4 das Maximum durch die Verschiebung der Eigenfrequenz zwar geringer wird im Vergleich zum langen Ansaugweg 3 also zum Graf 18, andererseits jedoch der Drehmomentenverlauf 20 auch Kurve flacher ist, so dass ein zweiter Schnittpunkt 23 zwischen dem Graf 18 und dem Graf 20 entsteht. Hieraus ergibt sich, dass es vorteilhaft ist, auch bei geringen Drehzahlen eine durchströmbare Querschnittsfläche, welche in Strömungsrichtung der Schaltklappe 4 liegt, freizugeben. In Versuchen wurde herausgefunden, dass deutliche Verbesserungen bei einer Querschnittsfläche der Öffnung 12,13 erzielt werden, die zwischen 1 % und 25% der gesamten Querschnittsläche eines einzelnen Luftansaugkanals 1 liegen, wobei optimale Ergebnisse im Bereich zwischen 10% und 20% auftreten.

Dementsprechend kann die Regelung derart erfolgen, dass bei geringen Drehzahlen die Kurzschlussöffnung 8 verschlossen ist, bis ein Auftreten des Drehmomentmaximums des langen Kanalweges 3 überschritten ist. Bei weiter steigender Drehzahl wird die Schaltklappe 4 in die Zwischenstellung 10 gefahren bzw. die Öffnung 13 durch Öffnen der Klappe 14 in die Stellung 15 freigegeben, wodurch sich, wie bereits erwähnt, die Eigenfrequenz erhöht und das Drehmomentenmaximum zur höheren Drehzahl hin verschoben wird. Dieser Schaltzeitpunkt entspricht der Drehzahl, bei der in den Versuchen der Schnittpunkt 21 zwischen den Drehmomentenverläufen 18 und 20 ermittelt wurde. Nach Überschreiten der höchsten Amplitude bei Zwischenstellung 10 der Schaltklappe 4 bzw. bei geöffneter Klappe 14 und weiter steigender Drehzahl wird der Moment erreicht, an dem die Klappe 4 in ihre vollständig geöffnete Stellung 7 gedreht wird und gegebenenfalls die Klappe 14 geschlossen wird, so dass im Wesentlichen der gesamte Luftstrom über die Kurzschlussöffnung 8 zum Zylinder gelangt. Dieser Moment entspricht wiederum dem Schnittpunkt 22 des Drehmomentenverlaufes 19 mit dem Drehmomentenverlauf 20 gemäß Figur 3.

Eine weitere Verbesserung des Drehmomentenverlaufes des Luftansaugkanalsystems ergibt sich, wenn die Steuerung der Klappen 4,14 derart erfolgt, dass zusätzlich im Drehzahlbereich unterhalb des Schnittpunktes 23 des Drehmomentenverlaufs 18 und des Drehmomentenverlaufs 20 die Klappe 14 geöffnet bzw. die Schaltklappe 4 in ihre Stellung 10 gedreht wird, während die Kurzschlussöffnung geschlossen bleibt, so dass die oben beschriebene Verflachung des Drehmomentenverlaufes bei freigegebener Öffnung 12,13 genutzt wird.

Auf diese Art und Weise wird ein Drehmomenteinbruch zwischen den beiden Drehmomentenmaxima bei vollständig geöffneter bzw. geschlossener Klappe 4 verhindert und ein höheres Drehmoment bei geringen Drehzahlen zur Verfügung gestellt.

Es wird deutlich, dass ein Luftansaugkanalsystem zur Verfügung gestellt wird, welches den Drehmomentenverlauf im Vergleich zu anderen schaltbaren Saugrohren deutlich optimiert, ohne dabei einen großen zusätzlichen Kosten- oder Montageaufwand aufbringen zu müssen. Der entstehende Drehmomentenverlauf ist im Vergleich zu bekannten stufenlos längenveränderbaren Luftansaugkanalsystemen beinahe gleichwertig, während die Kosten zur Montage und Herstellung eines derartigen Systems deutlich geringer ausfallen. Auch die Störanfälligkeit wird im Vergleich zu kontinuierlich längenveränderbaren Luftansaugkanalsystemen deutlich reduziert.

## Patentansprüche

1. Luftansaugkanalsystem für Verbrennungskraftmaschinen mit einem Sammeleinlasskanal, der fluidisch mit zu Zylindern der Verbrennungskraftmaschine führenden Luftansaugkanälen verbunden ist, wobei jeder Luftansaugkanal eine Kurzschlussöffnung aufweist, die durch ein Ventil beherrscht ist, welches je nach Betriebszustand der Verbrennungskraftmaschine eine fluidische Verbindung zu den einzelnen Luftansaugkanälen durch Öffnen oder Verschließen herstellt oder unterbricht, so dass die wirksame Ansauglänge der einzelnen Luftansaugkanäle wahlweise verkürzbar oder verlängerbar ist, **dadurch gekennzeichnet, dass** im Bereich der Kurzschiussöffnungen (8) jeweils eine Öffnung (12,13) zur fluidischen Verbindung des Sammeleinlasskanals (2) mit den einzelnen Luftansaugkanälen (1) freigebbar ist, deren durchströmbare Querschnittfläche zwischen 1 % und 25%, vorzugsweise zwischen 10% und 20% der durchströmten Querschnittsfläche des einzelnen Luftansaugkanals beträgt.

2. Luftansaugkanalsystem nach Anspruch 1 **dadurch gekennzeichnet, dass** die Öffnungen (13) jeweils in einer Wand (11) der einzelnen Luftansaugkanäle (1) angeordnet sind und durch je ein Ventil (14) beherrscht sind.

3. Luftansaugkanalsystem nach Anspruch 2 **dadurch gekennzeichnet, dass** die Öffnungen (13), betrachtet über die Gesamtansauglänge des Luftansaugkanals (1), jeweils etwa in der Mitte in einer Wand (11) des Luftansaugkanals (1) angeordnet sind.

4. Luftansaugkanalsystem nach Anspruch 2 oder 3 **dadurch gekennzeichnet, dass** die Ventile (14) als Klappenventile ausgeführt sind, wobei die gleichzeitig zu betätigenden Klappenventile (14) über eine Welle (15) miteinander verbunden sind und über eine gemeinsame Stellvorrichtung betätigbar sind.

5. Luftansaugkanalsystem nach Anspruch 1 **dadurch gekennzeichnet, dass** die Öffnungen (12) dadurch herstellbar sind, dass die die Kurzschlussöffnung (8) beherrschenden Ventile (4) über eine Stellvorrichtung in eine Zwischenstellung (10) schaltbar sind, in der lediglich ein Spalt (12) zwischen den Ventilen (4) und einem mit dem jeweiligen Ventil (4) korrespondierenden Abschnitt der Wand (11) des Luftansaugkanals (1) freigegeben ist.

6. Luftansaugkanalsystem nach Anspruch 5, **dadurch gekennzeichnet, dass** die die Kurzschlussöffnung (8) beherrschenden Ventile (4) als Klappenventile ausgeführt sind, die auf einer gemeinsamen Welle (6) angeordnet sind, die über eine Stellvorrichtung in Drehung versetzbar ist.

7. Luftansaugkanalsystem nach Anspruch 6, **dadurch gekennzeichnet, dass** die mit der Klappe (4) korrespondierende Wand (11) derart ausgebildet ist, dass der Spalt (12) zwischen Klappe (4) und Wand (11) im wesentlichen im in Strömungsrichtung der Luft liegenden Bereich der Klappe (4) entsteht.

8. Luftansaugkanalsystem nach einem der Ansprüche 5-7, **dadurch gekennzeichnet, dass** mit der Stellvorrichtung Winkel mit einer Genauigkeit von kleiner als 0,5° einstellbar sind.

9. Luftansaugkanalsystem nach einem der vorhergehenden Ansprüche, **dadurch gekennzeichnet, dass** die Öffnungen (12,13) bei Drehzahlen zwischen den jeweiligen Schnittstellen (21,22) der Drehmomentenkurve (20) mit den Drehmomentenkurven (18,19) des langen Kanals bzw. des kurzen Kanals freigegeben sind und in den anderen Drehzahlbereichen geschlossen sind.

10. Luftansaugkanalsystem nach Anspruch 9, **dadurch gekennzeichnet, dass** die Öffnungen (12,13) zusätzlich bei einer Drehzahl unterhalb des zweiten Schnittpunktes (23) der Drehmomentenkurve (20) mit der Drehmomentenkurve (18) des langen Ansaugkanals freigegeben sind.
